# EUROPEAN PATENT SPECIFICATION

(11) **EP 0 369 630 B1**
(45) Date of publication and mention of the grant of the patent: **14.12.1994**
(21) Application number: 89311158.3
(22) Date of filing: 30.10.1989
(51) Int. Cl.: H04B 14/04

(54) **Signal processing apparatus**
Signalverarbeitungseinrichtung
Dispositif de traitement de signal

(30) Priority: 15.11.1988 JP 288127/88
(43) Date of publication of application: 23.05.1990
(73) Proprietor: SONY CORPORATION, Tokyo (JP)
(72) Inventor: Ueki, Masaaki, Shinagawa-ku Tokyo (JP); Yasuda, Nobuyuki, Shinagawa-ku Tokyo (JP); Masuda, Toshihiko, Shinagawa-ku Tokyo (JP)
(74) Representative: Ayers, Martyn Lewis Stanley

(56) References cited:
- DE-A- 2 341 172
- IEEE TRANSACTIONS ON ACOUSTICS, SPEECH AND SIGNAL PROCESSING vol. 27, no.1, February 1979, NEW YORK pages 63 - 73; MAKHOUL ET AL: 'Adaptive NoiseSpectral Shaping and Entropy Coding in Predictive Coding of Speech'
- IEEE Journal of Solid-State Circuits, vol. SC-22, no. 6, December 1987, pages 921 - 929, New York, US

## Description

This invention relates to a signal processing apparatus which makes use of a so-called noise shaping circuit to reduce the quantisation noise.

Noise shaping is a technology according to which the spectrum of quantisation noise produced at the time of quantising or rounding data such as audio or video signal data is changed so that, for example, the noise level in the audio range is reduced significantly to improve the signal to noise (S/N) ratio. A known technique for noise shaping involves feeding back quantisation error components to the input side, as disclosed for example in "Adaptive Noise Spectral Shaping and Entropy Coding in Predictive Coding of Speech" appearing in IEEE Transactions on Acoustics, Speech and Processing, February 1979, volume ASSP-27, No 1, pages 63 to 73. However, when an audio signal, for example, is subjected to such noise shaping, a characteristic pattern, the so-called "idling pattern", which is rather harsh to the ear, may be produced at minute signal levels.

The conventional practice to overcome this difficulty is to perform noise shaping after a dither signal is added to an input signal, as disclosed in the Japanese laid open patent publication number 51-48214, and as shown herein in figure 6.

In this figure, an input signal supplied to an input terminal 61 is supplied to an adder 62 where there is added to it a dither signal from a dither generator 63, the sum of these two then applied to a noise shaping circuit 64. The output from the noise shaping circuit 64 is transmitted to a D/A converter 65 and thereby converted into corresponding analog signals which are output from an output terminal 68.

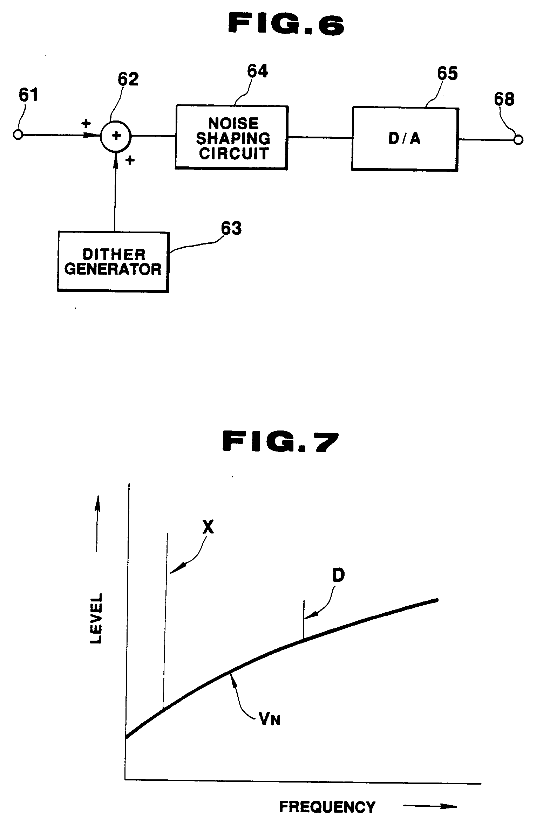

Figure 7 shows the frequency spectrum of the output signals from an output terminal 68. In this figure, X stands for an input signal, D a dither signal introduced at the input side and V_{N} and a quantisation error component. By noise shaping, the quantisation noise component V_{N} exhibits a lower noise level at the lower frequencies in the audio range. The output signal Y from the output terminal 68 is represented by the following formula (1)${\text{Y = X + S + V}}_{\text{N}}$
Hence, difficulty arises that the dither signal D is outputted even though there is no input signal, that is the input signal X is zero. The signal to quantisation noise power ratio or S/N ratio is given by the formula (2)${\text{S/N = X²/V}}_{\text{N}} \text{2}$

It is also necessary that the frequency range of the introduced dither signal lies outside the audio range, while it is also necessary that the dither signal remaining at the time of D/A conversion be removed by a low pass filter.

The IEEE Journal of Solid-State Circuits, Vol. SC-22, No. 6, December 1987, 921-929 describes a technique using a pair of delta-sigma quantisers. A signal to be processed is split and in one case inverted and then a dither signal is added. The resultant signal is then passed to the delta-sigma quantisers above. The outputs are then subtracted from each other to provide an output which should contain little or no dither signal.

It is an object of the present invention to obviate the above difficulties of the prior art and to provide a signal processing apparatus according to which a dither signal component in the output signal which is obtained by introducing a dither signal into an input signal and noise shaping the resulting mixed signal may be cancelled by a simplified system.

It is another object of the present invention to provide a signal processing apparatus whereby the signal to quantisation noise ratio or S/N ratio may be further improved.

According to the present invention, there is provided a signal processing apparatus adapted for reducing the quantisation noise generated at the time of quantising data comprising a plurality of signal processing circuits, each of said signal processing circuits comprises:
a dither generator for generating a dither;
a first noise shaping circuit to which, in use, a signal representing relative addition between an input signal and said dither is supplied;
a second noise shaping circuit to which, in use, a signal representing relative subtraction between said input signal and said dither is supplied;
combining means for effectively combining respective components of output signals of said first and second noise shaping circuits, characterised in that, in use, the input signal is supplied in parallel to each of said processing circuits;
different dithers generated by said dither generators are used in said respective signal processing circuits, and
the outputs of said signal processing circuits being combined together.

Thus, at least four noise shaping circuits are employed. One of the noise shaping circuits is supplied with the sum of the dither signal and the input signal while the other noise shaping circuit is supplied with a difference signal between the dither signal and the input signal. The output signals from the noise shaping circuits are summed together or subtracted one from the other so that the respective input signal components are effectively summed together while the dither signal components are cancelled.

Therefore, at the final stage of signal addition or subtraction, the dither signal components in the output signals are cancelled by signal subtraction and the input signal components are doubled in amplitude and squared in power by signal addition, whereas the quantisation noise components in the output signals are simply doubled in power, resulting in an improved S/N ratio.

The invention will be further described by way of non-limitative example with reference to the accompanying drawings, in which:-
Figure 1 is a block circuit diagram showing the main element of a signal processing apparatus which although not per se an embodiment of the invention will be described to assist in explaining the invention.
Figure 2 is a chart showing the frequency spectrum of an output signal in the circuit shown in Figure 1.
Figure 3 is a block circuit diagram showing a second form of the main elements of a signal processing apparatus;
Figure 4 is a block circuit diagram showing a third form of the main element of a signal processing apparatus;
Figure 5 is a block circuit diagram showing an embodiment of a signal processing apparatus according to the present invention;
Figure 6 is a block circuit diagram showing a conventional signal processing apparatus; and
Figure 7 is a chart showing the frequency diagram of an output signal of the apparatus shown in Figure 6.

In the drawings, like reference numerals are used to denote like parts or parts performing like functions.

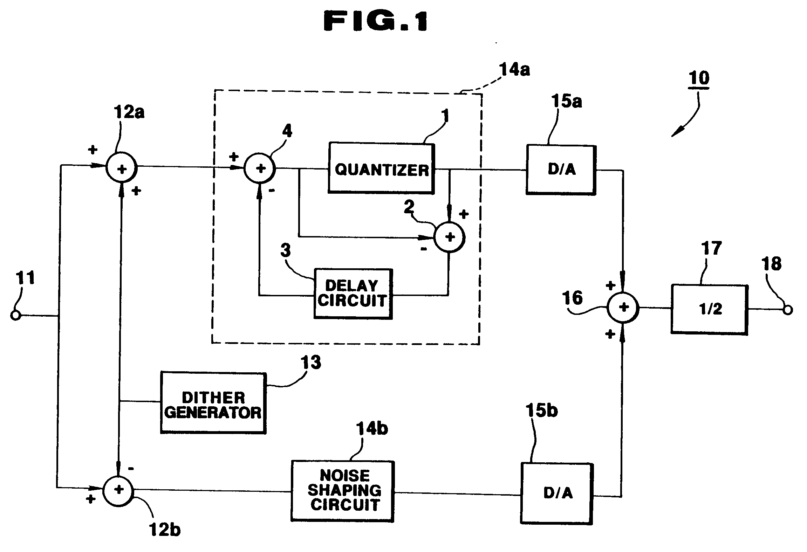

Figure 1 shows, in a block circuit diagram, the main element of a signal processing apparatus,

In the signal processing circuit 10, shown in figure 1, a digital audio signal composed of, for example, 16 bits, is supplied to an input terminal 11 and thence to adders 12a and 12b. A dither signal from a dither generator 13 is added to the input signal at an adder 12a and the resulting sum signal is supplied to a noise shaping circuit 14a. The dither signal from the dither generator 13 is subtracted from the input signal at an adder 12b and the resulting difference signal is supplied to a noise shaping circuit 14b. The noise shaping circuits 14a, 14b may effect substantially identical noise shaping of their inputs and may be of the same construction. Specifically they may be of a type in which quantisation errors produced when reducing the number of bits of the input digital signal by a quantiser or requantiser, for example, rounding a 16-bit input to a 4-bit output, are fed back to the input side, by way of an error feedback operation. That is, the noise shaping circuit 14a or 14b is so arranged and constructed that an input to a quantiser 1 is subtracted from an output to the quantiser 1 by an adder 2 and the resulting subtraction output or quantisation error is fed back to an input side adder 4 of the quantiser 1 by way of a delay circuit 3. The outputs from these noise shaping circuits 14a and 14b are transmitted to D/A converters 15a and 15b, respectively, where they are converted into corresponding analog signals which are then combined together at an adder 16 and attenuated in gain by the half by a 1/2 attenuator before being taken out at an output terminal 18.

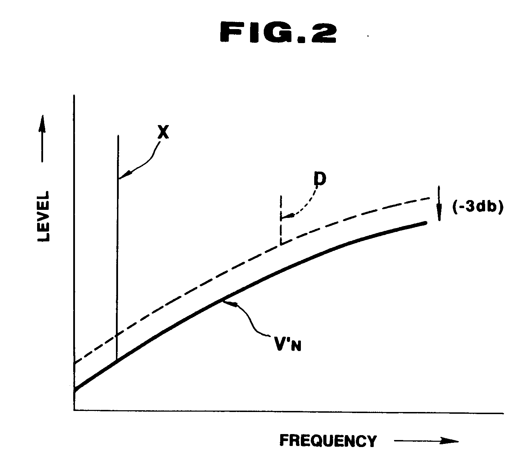

In the above described signal processing circuit 10, the dither signal D from the dither generator 13 is added to the input signal X to the input terminal 11 at the adder 12a, while it is subtracted from the input signal at the other adder 12b, and the resulting sum and subtraction signals are subjected separately to noise shaping. Thus an output signal Y₁ of an addition system and an output signal Y₂ of a subtraction system may be represented by the formulae (3) and (4):${\text{Y₁ = X + D + V}}_{\text{N}}$${\text{Y₂ = X - D + V}}_{\text{N}} \text{′}$
respectively, where V_{N} and V_{N}′ are quantisation noises at the noise shaping circuits 14a and 14b, respectively. These signals Y₁ and Y₂ are combined together at the adder 16 to cancel the dither signal D completely. The input signal becomes 2X by such addition, that is the amplitude is doubled, so that the power is equal to (2X)². On the other hand, the quantisation noises V_{N} and V_{N}′ are of a random phase, so that the noise power after the above addition is equal to V_{N}² + V_{N}′² and, if the noises are of equal amplitude, the noise power is equal to 2V_{N}². Hence the power ratio of the signal component to the quantisation noise or S/N ratio is given by the formula (5)${\text{S/N = 4X²/2V}}_{\text{N}} {\text{² = 2(X²/V}}_{\text{N}} \text{²)}$
which means that the S/N ratio is twice that of the prior art system indicated by the formula (2), that is, the S/N ratio is improved by 3 decibels (dB). Figure 2 shows the frequency spectrum of the output signal following such addition. The broken line in Figure 2 illustrates, for reference sake, the frequency spectrum in the prior art which by itself is shown in Figure 7.

Also, since the dither signal introduced at the input side has been cancelled in the ultimate output signal, the dither signal, which it has hitherto been thought impossible to superimpose in the audio range, can now be superimposed in the audio range. For example, an M-series random number signal, which is not subject to handwidth limitation, may be used as the dither signal.

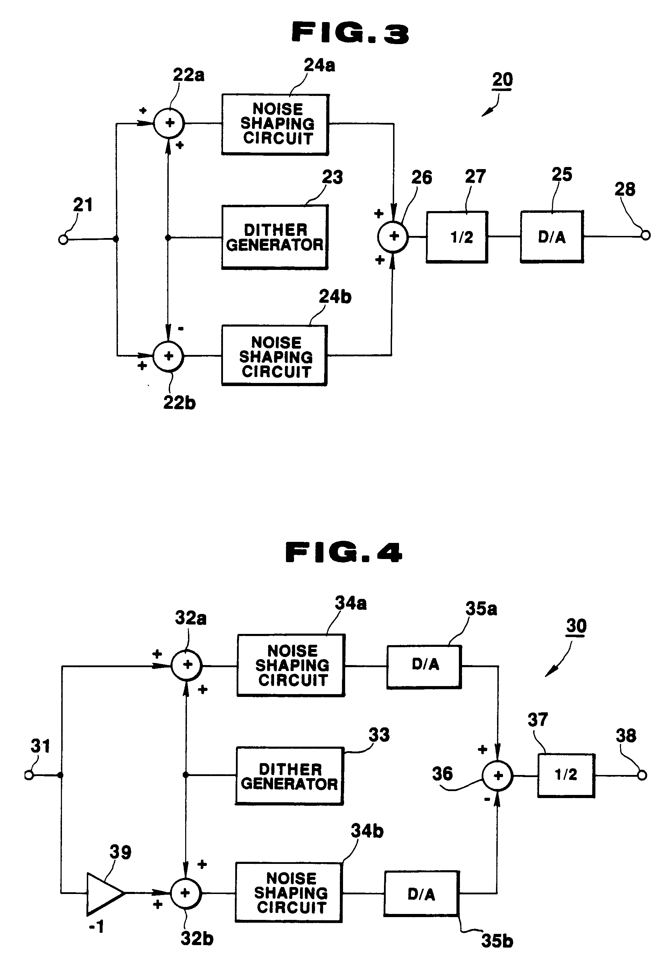

Figure 3 shows a part of a second form of apparatus in which the D/A conversion of the signal processing circuit is performed at the last stage.

In the signal processing circuit 20, shown in Figure 3, the input signal supplied to an input terminal 21 is transmitted therefrom to adders 22a and 22b where dither signals from a dither generator 13 are added to or subtracted from the input signal and the resulting sum and difference signals are supplied to noise shaping circuit 24a and 24b respectively. The outputs from these noise shaping circuits 24a and 24b are combined together in advance at an adder 26 where the dither signal components are cancelled and the input signal components are combined together. The output from the adder 26 is attenuated by 1/2 by a 1/2 attenuator 27 and the attenuated signal is transmitted to a D/A converter 25 for D/A conversion before being taken out at an output terminal 28.

This second form of circuit is similar in operation and result to the above described first form and, besides, is more economically advantageous since only one D/A converter per processing circuit is required.

By way of a modification of either of the above embodiments, input signals having opposite polarities or phases may be superimposed on a dither signal of the same polarity or phase and signal subtraction may be performed after noise shaping.

Thus, in a third form of a signal processing circuit 30 shown in Figure 4, an input signal supplied to an input terminal 31 is supplied to an adder 32a while being inverted in polarity or phase by an inverter 39 and supplied to an adder 32b. In these adders 32a and 32b, the dither signal from the dither generator 33 is added to the non-inverted input signal and to the inverted input signal, respectively. Since the input signals are reversed in polarity, or phase, relative to each other, the input signals and the dither signals are subjected to addition on one hand and to relative subtraction on the other. The outputs from these adders 32a and 32b are transmitted to noise shaping circuits 34a and 34b, respectively and thence to D/A converters 35a and 35b, respectively, so as to be converted into corresponding signals which are supplied to an adder 36. In the adder 36, one of the signals is subtracted from the other, thus so that the input signal components having the opposite polarity or phase to each other are combined together. The output from the adder 36 is attenuated in gain by 1/2 by a 1/2 attenuator 37 before being taken out at an output terminal 38.

It is to be noted that the third form of circuit operates and produces a result similar to that of the above described first form. In the third form the outputs from the noise shaping circuits 34a and 34b may be subjected to subtraction at an adder and the resulting difference signal may then be converted into a corresponding signal by one D/A converter, similarly to the above described second form.

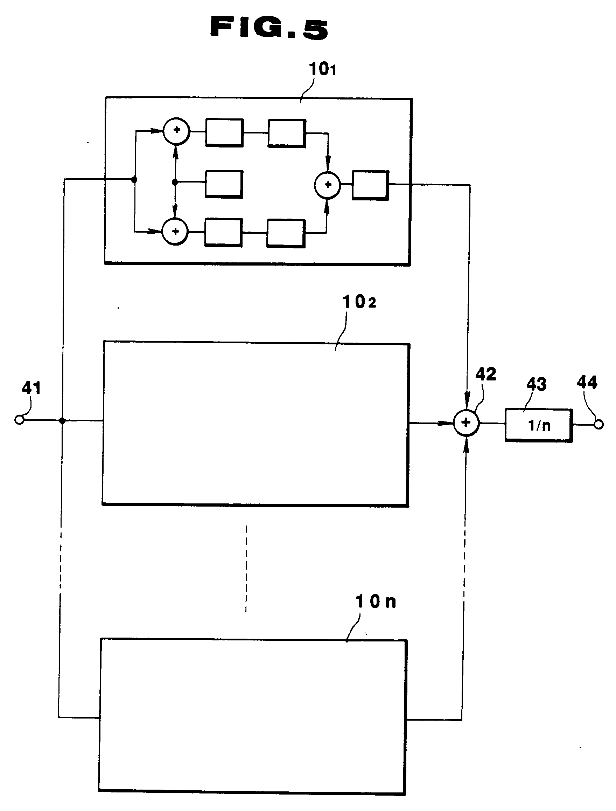

According to an embodiment of the invention, a number n of the above described signal processing circuits, each having two noise shaping circuits, and a number n of different dither signals is used. In Figure 5, each of circuit 10₁, 10₂, ..., 10ₙ is the same as the signal processing apparatus 10 of the above described circuit and different dither signals are used in the respective circuits 10₁ to 10ₙ. An input signal from an input terminal 41 is supplied to each of these circuits 10, to 10ₙ. The output signals from these circuits 10₁ to 10ₙ are supplied to an adder 42 and thence to a 1/n attenuator 43 where the output signal of the adder 42 is attenuated by 1/n before being taken out at an output terminal 44. As with circuits 10₁ to 10ₙ, the signal processing circuits 20 or 30 may be used instead, either alone or in combination. It is however necessary to use different dither signals for each of the signal processing circuits 10₁ to 10ₙ.

In the embodiment of the invention, shown in Figure 5, the S/N ratio of the output signal at the output terminal 44 is improved by 3 x log₂n decibels (dB) over a single circuit.

According to the signal processing apparatus of the present invention, dither signal components in the output signal may be cancelled completely so that the necessity of providing an analog LPF, for example, for D/A conversion, may be eliminated to simplify the circuitry, while the signals not placed under bandwidth limitations, such as M series signals, may be used as the dither signals. The signal to noise ratio may also be improved since the input signal components in the noise shaping circuit outputs are effectively summed together at the final stage of signal processing.

## Claims

1. A signal processing apparatus adapted for reducing the quantisation noise generated at the time of quantising data comprising a plurality of signal processing circuits (10₁, 10₂, ... 10ₙ) each of said signal processing circuits comprises:
a dither generator (13) for generating a dither;
a first noise shaping circuit (14a) to which, in use, a signal representing relative addition between an input signal and said dither is supplied;
a second noise shaping circuit (14b) to which, in use, a signal representing relative subtraction between said input signal and said dither is supplied;
combining means (16) for effectively combining respective components of output signals of said first and second noise shaping circuits,
characterised in that, in use, the input signal is supplied in parallel to each of said processing circuits (10₁, 10₂, ... 10ₙ) different dithers generated by said dither generators (13) are used in said respective signal processing circuits, and
the outputs of said signal processing circuits (10₁, ... 10ₙ) being combined together.

2. The signal processing apparatus according to claim 1 wherein each said noise shaping circuit (14a, 14b) comprises:
a quantiser (1),
a first subtracter (2) for subtracting an input signal to said quantiser (1) from an output signal from said quantiser (1), and
a second subtracter (4) for subtracting a delayed output signal of said first subtracter (1) from said input signal to said quantiser.

3. The signal processing apparatus according to claim 1 or 2, wherein
the signal which is the sum of said input signal and said dither is supplied to said first noise shaping circuit (14a), and wherein
a signal which is the sum of an inversion of said input signal and said dither is supplied to said second noise shaping circuit (14b) of the respective signal processing circuit (10₁, ... 10ₙ).

4. The signal processing apparatus according to claim 3 in which the combining means comprises a subtracter (36) for subtracting outputs of said first and second noise shaping circuits one from the other.

5. The signal processing apparatus according to any one of the preceding claims, further comprising a D/A converter (25) to which the output of said combining means (26) is supplied.

6. The signal processing apparatus according to any of the preceding claims comprising an N number of said signal processing circuits (10₁, ... 10_{N}) and gain control means (43) for attenuating the outputs of said combining means (42) by 1/N.

## Patentansprüche

1. Signalverarbeitungseinrichtung zur Reduzierung des Quantisierungsrauschens, das während der Quantisierung von Daten erzeugt wird, mit mehreren Signalverarbeitungsschaltungen (10₁, 10₂,... 10ₙ), wobei jede Signalverarbeitungsschaltung umfaßt:
einen Zittersignalgenerator (13) zum Erzeugen eines Zittersignals;
eine erste Rauschen-Formerschaltung (14a), der im Betrieb ein Signal zugeführt wird, das eine relative Addition zwischen einem Eingangssignal und dem Zittersignal darstellt;
eine zweite Rauschen-Formerschaltung (14a), der im Betrieb ein Signal zugeführt wird, das eine relative Subtraktion zwischen dem Eingangssignal und dem Zittersignal darstellt;
eine Kombiniervorrichtung (16) zum wirksamen Kombinieren der jeweiligen Komponenten der Ausgangssignale der ersten und der zweiten Rauschen-Formerschaltung, **dadurch gekennzeichnet, daß**
im Betrieb das Eingangssignal jeder Signalverarbeitungsschaltung (10₁, 10₂,... 10ₙ) parallel zugeführt wird,
unterschiedliche vom Zittersignalgenerator (13) erzeugte Zittersignale in den jeweiligen Signalverarbeitungsschaltungen benutzt werden, und
die Ausgangssignale der Signalverarbeitungsschaltungen (10₁, 10₂,... 10ₙ) zusammen kombiniert werden.

2. Signalverarbeitungseinrichtung nach Anspruch 1, wobei jede Rauschen-Formerschaltung (14a, 14b) umfaßt:
einen Quantisierer (1);
einen ersten Subtrahierer (2) zum Subtrahieren eines Eingangssignals des Quantisierers (1) von einem Ausgangssignal des Quantisierers (1), und
einen zweiten Subtrahierer (4) zum Subtrahieren eines verzögerten Ausgangssignals des ersten Subtrahierers (1) vom Eingangssignal des Quantisierers.

3. Signalverarbeitungseinrichtung nach Anspruch 1 oder 2, wobei
das Signal, das die Summe aus dem Eingangssignal und dem Zittersignal darstellt, der ersten Rauschen-Formerschaltung (14a) zugeführt wird, und wobei
ein Signal, das die Summe aus dem invertierten Eingangssignal und dem Zittersignal darstellt, der zweiten Rauschen-Formerschaltung (14b) der jeweiligen Signalverarbeitungsschaltung (10₁, 10₂,..., 10ₙ) zugeführt wird.

4. Signalverarbeitungseinrichtung nach Anspruch 3, wobei die Kombiniervorrichtung einen Subtrahierer (36) zum Subtrahieren der Ausgangssignale der ersten und der zweiten Rauschen-Formerschaltung voneinander aufweist.

5. Signalverarbeitungseinrichtung nach einem der vorhergehenden Ansprüche desweiteren mit einem D/A-Wandler (25), dem das Ausgangssignal der Kombiniervorrichtung (26) zugeführt wird.

6. Signalverarbeitungseinrichtung nach einem der vorhergehenden Ansprüche mit einer Anzahl von N Signalverarbeitungsschaltungen (10₁, 10₂,...,10ₙ) und einer Verstärkungs-Steuerungsvorrichtung (43) zum Dämpfen der Ausgangssignale der Kombiniervorrichtung (26) um 1/N.

## Revendications

1. Dispositif de traitement de signaux conçu pour réduire le bruit de quantification produit au moment de la quantification de données, comprenant une pluralité de circuits de traitement de signaux (10₁, 10₂, ..., 10ₙ), chacun desdits circuits de traitement de signaux comprenant :
un générateur de vibrations (13) pour produire une vibration ;
un premier circuit de mise en forme de bruit (14a) auquel, en utilisation, on délivre un signal représentant une addition relative entre un signal d'entrée et ladite vibration ;
un second circuit de mise en forme de bruit (14b) auquel, en utilisation, on délivre un signal représentant la soustraction relative entre ledit signal d'entrée et ladite vibration ;
un moyen de combinaison (16) pour combiner efficacement les composantes respectives des signaux de sortie desdits premier et second circuits de mise en forme de bruit ;
caractérisé en ce que, en utilisation, le signal d'entrée est délivré en parallèle à chacun desdits circuits de traitement (10₁, 10₂, ..., 10ₙ) ;
en ce que des vibrations différentes, produites par lesdits générateurs de vibrations (13), sont utilisées dans lesdits circuits de traitement de signaux respectifs ; et
en ce que les sorties desdits circuits de traitement de signaux (10₁, ..., 10ₙ) sont combinées ensemble.

2. Dispositif de traitement de signaux selon la revendication 1, dans lequel chacun desdits circuits de mise en forme de bruit (14a, 14b) comprend :
un quantificateur (1) ;
un premier soustracteur (2) pour soustraire un signal d'entrée dans ledit quantificateur (1) d'un signal de sortie dudit quantificateur (1) ; et,
un second soustracteur (4) pour soustraire un signal de sortie retardé dudit premier soustracteur (1) dudit signal d'entrée dans ledit quantificateur.

3. Dispositif de traitement de signaux selon la revendication 1 ou 2, dans lequel :
le signal qui est la somme dudit signal d'entrée et de ladite vibration est délivrée audit premier circuit de mise en forme de bruit (14a), et dans lequel :
un signal qui est la somme d'une inversion dudit signal d'entrée et de ladite vibration est délivrée audit second circuit de mise en forme de bruit (14b) du circuit de traitement de signaux respectif (10₁, ..., 10ₙ).

4. Dispositif de traitement de signaux selon la revendication 3, dans lequel le moyen de combinaison comprend un soustracteur (36) pour soustraire, l'une de l'autre, les sorties desdits premier et second circuits de mise en forme de bruit.

5. Dispositif de traitement de signaux selon l'une quelconque des revendications précédentes, comprenant en outre un convertisseur D/A (de numérique en analogique) (25) auquel la sortie dudit moyen de combinaison (26) est délivrée.

6. Dispositif de traitement de signaux selon l'une quelconque des revendications précédentes, comprenant un nombre N de dits circuits de traitement de signaux (10₁, ..., 10_{N}), et un moyen de commande de gain (43) pour atténuer par 1/N les sorties dudit moyen de combinaison (42).
